# EUROPEAN PATENT APPLICATION

(11) **EP 3 995 450 A1**
(43) Date of publication of application: **11.05.2022**
(21) Application number: 20835668.3
(22) Date of filing: 29.06.2020
(51) Int. Cl.: C01B 39/26, C01B 39/46

(54) **METHOD FOR PRODUCING ZEOLITE**

(30) Priority: 03.07.2019 JP 2019124817
(71) Applicant: Mitsui Mining & Smelting Co., Ltd., Shinagawa-ku Tokyo 141-8584 (JP)
(72) Inventor: SENOO, Yuichi, Ageo-shi, Saitama 362-0021 (JP); HAYASHI, Katsuhiko, Ageo-shi, Saitama 362-0021 (JP); TOMITA, Junki, Ageo-shi, Saitama 362-0021 (JP); KOGAWA, Takahiro, Ageo-shi, Saitama 362-0021 (JP); KANNO, Akihiro, Ageo-shi, Saitama 362-0021 (JP)
(74) Representative: Novagraaf Technologies
(86) International application number: PCT/JP2020/025524
(87) International publication number: WO 2021/002324

(57) **Abstract**

A method for producing a zeolite with improved Si/AI according to the present invention includes the steps of: subjecting a zeolite synthesized without using an organic structure directing agent to ion exchange, thereby obtaining a sodium-type, a proton-type, or an ammonium-type zeolite; and bringing the zeolite subjected to ion exchange into contact with an ammonium salt solution, thereby dealuminating the zeolite. It is preferable that the ammonium salt is any one of ammonium oxalate, ammonium fluoride, ammonium fluorosilicate, ammonium fluoroborate, ammonium fluorophosphate, ammonium fluorotitanate, and ammonium florozirconate. It is also preferable that the zeolite after ion exchange is exposed to water vapor, and is then brought into contact with the ammonium salt solution.

## Description

### Technical Field

The present invention relates to a method for producing a zeolite.

### Background Art

Synthetic zeolites are crystalline aluminosilicates and each have sub-nano-sized uniform pores resulting from the crystal structure thereof. Taking advantage of this feature, synthetic zeolites are industrially used as molecular sieve adsorbents that adsorb only molecules with specific sizes, adsorption separators that adsorb molecules with strong affinities, or catalyst bases. Beta zeolites, which are a type of such zeolites, are currently used in large quantities all over the world as catalysts in the petrochemical industry and as adsorbents for treating automobile exhaust gas. Conventionally, beta zeolites have been synthesized using an organic structure directing agent (hereinafter, also referred to as an "OSDA"), but in recent years, a method for synthesizing a beta zeolite without using an OSDA has been proposed (see Patent Literature 1). In a similar manner, mordenite zeolites are also currently used in large quantities all over the world as catalysts in the petrochemical industry. A method for synthesizing a mordenite zeolite without using an OSDA is described in, for example, Patent Literature 2.

Zeolites synthesized without using an OSDA (hereinafter, also referred to as "OSDA-free zeolites") have a low Si/AI ratio and exhibit high crystallinity. Due to this feature, OSDA-free zeolites are characterized by having high ion exchange capacity derived from a low Si/AI ratio and high durability and high selectivity derived from high crystallinity. However, generally, in order to use zeolite in a wide range of application, it is important to adjust the Si/AI ratio according to the purpose of use, in consideration of the affinity with a reactant (differences in hydrophilicity/hydrophobicity and polarity). That is to say, in order to utilize high crystallinity of an OSDA-free zeolite in a wide range of application, a technique is necessary that adjusts the Si/AI ratio by dealuminating the zeolite while maintaining the crystallinity.

As a conventional technique for adjusting the Si/AI ratio of a beta zeolite, for example, a technique described in Patent Literature 3 is known. In

Patent Literature 3, a beta zeolite is subjected to ion exchange to obtain an ammonium-type beta zeolite, which is then exposed to water vapor, and the exposed beta zeolite is subjected to acid treatment to adjust the Si/AI ratio of the beta zeolite.

### Citation List

### Patent Literature

Patent Literature 1: US 2012/190534A1
Patent Literature 2: JP S58-217425A
Patent Literature 3: US 2017/368539A1

### Summary of Invention

However, Patent Literature 3 describes only examples in which the Si/AI ratio is more than 40. The inventors of the present invention retested the technique described in Patent Literature 3, and found that it is not easy for this technique to obtain a beta zeolite having an Si/AI ratio in a relatively low range of 40 or less while maintaining the crystallinity. Furthermore, the inventors also found that it is not easy either for this technique to obtain a mordenite zeolite having an Si/AI ratio in a relatively low range of 40 or less while maintaining the crystallinity. Zeolites having a relatively low Si/AI ratio of 40 or less are important for application due to their high ion exchange capacity and high acidity because they contain more Al than zeolites having an Si/AI ratio of more than 40. Accordingly, it is an object of the present invention to provide a method for producing a zeolite having high crystallinity in the range of a relatively low Si/AI ratio.

The present invention provides a method for producing a zeolite, including the steps of:
subjecting a zeolite synthesized without using an organic structure directing agent to ion exchange, thereby obtaining a sodium-type, a proton-type, or an ammonium-type zeolite; and
bringing the zeolite subjected to ion exchange into contact with an ammonium salt solution, thereby dealuminating the zeolite.

### Description of Embodiment

Hereinafter, the present invention will be described based on a preferred embodiment thereof. In the following description, the "range of a relatively low Si/AI ratio" is a range in which the Si/AI ratio is 40 or less. The producing method of the present invention includes a step of bringing a zeolite synthesized without using an OSDA into contact with an ammonium salt solution, that is, a step of dealuminating the zeolite. Methods for producing an OSDA-free zeolite are known in the art, and are described in, for example, Patent Literatures 1 and 2 above.

In dealumination of an OSDA-free zeolite, it is desirable not to reduce the crystallinity of zeolite to the extent possible. For this purpose, in the producing method of the present invention, it is preferable to bring an OSDA-free zeolite into contact with an ammonium salt solution to dealuminate the zeolite. Specifically, it is preferable to bring a sodium-type, a proton-type, or an ammonium-type OSDA-free zeolite into contact with an ammonium salt solution to remove aluminum from the framework of the zeolite, thereby obtaining a zeolite with an adjusted Si/AI ratio.

There is no particular limitation on the type of zeolite to which the producing method of the present invention can be applied. The zeolite is preferably a beta zeolite or a mordenite zeolite from the viewpoint of easily realizing a range of a relatively low Si/AI ratio.

The above-mentioned ammonium salt may be either an organic ammonium salt or an inorganic ammonium salt. Examples of the organic ammonium salt include an organic acid ammonium salt such as ammonium oxalate. Examples of the inorganic ammonium salt include ammonium fluoride, ammonium fluorosilicate, ammonium fluoroborate, ammonium fluorophosphate, ammonium fluorotitanate, and ammonium fluorozirconate. These ammonium salts may be used alone or in a combination of two or more.

Dealumination using an ammonium salt can be performed by adding an ammonium salt to an aqueous zeolite dispersion. The concentration of zeolite in the aqueous dispersion is preferably from 0.0033 g/mL to 1 g/mL, more preferably from 0.01 g/mL to 0.66 g/mL, and even more preferably from 0.033 g/mL to 0.33 g/mL, from the viewpoint of smoothly performing dealumination while maintaining the crystallinity of the zeolite.

The form in which the ammonium salt may be added to the aqueous dispersion may be either a solution or a powder form. Note that, when using an ammonium salt in a powder form, it needs to be dissolved in the aqueous dispersion. From an industrial viewpoint, it is preferable to add an ammonium salt in an aqueous solution form to the aqueous zeolite dispersion. The concentration of ammonium salt in an aqueous solution obtained by adding an ammonium salt solution to the aqueous zeolite dispersion is preferably from 0.01 mol/L to 3 mol/L, more preferably from 0.05 mol/L to 2 mol/L, and even more preferably from 0.1 mol/L to 1 mol/L, from the viewpoint of smoothly performing dealumination while maintaining the crystallinity of the zeolite.

Furthermore, it is also possible to directly produce an ammonium salt in the aqueous solution by a neutralization reaction between an appropriate aqueous acid solution and aqueous base solution, instead of dissolving an ammonium salt in a powder form in the aqueous solution. For example, if an aqueous fluorosilicic acid (H₂SiF₆) solution is neutralized with an aqueous ammonia (NH₃) solution to directly produce ammonium fluorosilicate ((NH₄)₂SiF₆) in the solution, similar effects to those when an ammonium fluorosilicate powder is dissolved in water are obtained.

The ammonium salt solution and the zeolite subjected to ion exchange are preferably brought into contact with each other such that the resulting zeolite has a later-described Si/AI ratio.

The aqueous zeolite dispersion and the ammonium salt solution may be mixed with each other with or without heating. If they are mixed with heating, the liquid temperature is preferably from 0°C to 100°C, more preferably from 25°C to 90°C, and even more preferably from 25°C to 80°C, from the viewpoint of smoothly performing dealumination while maintaining the crystallinity of the zeolite.

The zeolite may be subjected to pretreatment, prior to dealumination of the zeolite. After the pretreatment, the zeolite is dealuminated. Examples of the pretreatment include water vapor treatment of zeolite. If the zeolite is subjected to pretreatment, the dealumination can be facilitated.

The above-described pretreatment is preferably performed after the zeolite is made into a sodium-type, a proton-type, or an ammonium-type zeolite. In the case of performing water vapor treatment as the pretreatment, it is sufficient to allow zeolite to stand in a water vapor atmosphere or to arrange zeolite in a water vapor flow. For example, zeolite may be exposed to water vapor using an apparatus shown in Fig. 1 of US 2017/368539A1. The temperature of water vapor is preferably from 90°C to 800°C, more preferably from 200°C to 700°C, and even more preferably from 300°C to 700°C. The time of exposure to water vapor is preferably from 1 hours to 50 hours, more preferably from 2 hours to 20 hours, and even more preferably from 5 hours to 20 hours, providing that the temperature of water vapor is within the above-mentioned range.

Regardless of whether or not pretreatment is performed before dealumination, aftertreatment may be performed after dealumination. As the aftertreatment, it is preferable to perform acid treatment. If acid treatment is performed, it is easier to obtain a zeolite having high crystallinity and having an adjusted Si/AI ratio. Examples of the acid that can be used in the acid treatment include various mineral acids such as nitric acid, hydrochloric acid, and sulfuric acid. Of these mineral acids, it is preferable to use nitric acid.

The concentration of aqueous acid solution that can be used in the acid treatment is preferably from 0.001 N to 20 N, more preferably from 0.01 N to 13 N, and even more preferably from 0.1 N to 3 N. Note that "N" represents the normality. The amount of aqueous acid solution added is preferably from 10 mL to 500 mL, more preferably from 10 mL to 300 mL, and even more preferably from 10 mL to 30 mL, with respect to 1 g of zeolite after dealumination.

The zeolite or the aqueous zeolite dispersion and the aqueous acid solution may be mixed with each other with or without heating. If they are mixed with heating, the liquid temperature is preferably from 40°C to 100°C, more preferably from 60°C to 100°C, and even more preferably from 80°C to 100°C.

The thus produced zeolite may be of a proton type, an ammonium type, a sodium type, a potassium type, or a lithium type. Furthermore, the zeolite produced using the method of the present invention may be subjected to ion exchange to exchange an ion exchange site with a transition metal ion. Examples of the transition metal that can be used in the ion exchange include iron, copper, cobalt, nickel, chromium, molybdenum, manganese, vanadium, titanium, cerium, ruthenium, platinum, silver, and iridium. When the zeolite of the present invention is in a state of being ion-exchanged with a transition metal, the performance as a catalyst for various reactions may be further improved. Ion exchange with transition metal ions can be performed, for example, by dispersing zeolite in an aqueous ammonium nitrate solution to obtain ammonium-type beta zeolite, and then using the method described in JP 2014-019601A.

In the producing method of the present invention, a step of allowing an oxide of phosphorus, zirconium, zinc, or silicon to be present on the surface of the zeolite may be further performed before or after the above-described ion exchange. Zeolite having oxides of these elements on the surface has an appropriately controlled amount of acid on the surface, and is more useful as an adsorbent for various compounds and a catalyst for various reactions. In order to allow oxides of these elements to be present on the surface of zeolite, it is sufficient to use, for example, an impregnation method, an evaporative drying method, or a surface modification method using a coupling agent such as a silane coupling agent or a zirconium coupling agent. Whether or not the oxides of these elements are present on the surface can be confirmed, for example, by X-ray photoelectron spectroscopy.

In the producing method of the present invention, a step of adding at least one element M selected from titanium, tin, zinc, niobium, tantalum, and zirconium to zeolite may be performed. The reason for this is that the element M can be an active site for various chemical reactions. In order to cause the element M to be contained in the zeolite, it is sufficient to use, for example, a known method such as an impregnation method or an evaporative drying method.

Instead of or in addition to the above-described step, a step of causing the at least one element M to be contained in the framework of zeolite may be performed. The reason for this is that it has an excellent carrying capacity for polyvalent metal cations and can be an active site for various chemical reactions. From these viewpoints, the value of Si/(M+Al) as expressed in an atomic ratio is preferably from 4 to 2000, more preferably from 4 to 300, and even more preferably from 4 to 40. In order to cause the element M to be contained in the framework of zeolite, it is sufficient to use, for example, a known method such as a hydrothermal synthesis method, a dry gel conversion method, or a solid phase crystallization method.

The zeolite produced using the method of the present invention preferably has high peak intensity obtained by X-ray diffraction measurement. The peak intensity obtained by X-ray diffraction measurement is mainly related to the crystallinity of zeolite. Specifically, in the present invention, when the diffraction intensity of a main peak of zeolite observed by X-ray diffraction measurement is taken as A, and the diffraction intensity of the (116) plane of α-alumina, which is the standard substance 674a distributed by the American National Institute of Standards and Technology, the intensity being observed by X-ray diffraction under the same conditions as described above, is taken as B, an A/B value representing the intensity ratio of A to B can be used as a measure of crystallinity. The larger the A/B value, the higher the crystallinity of the zeolite.

The A/B value is obtained by X-ray diffraction measurement performed on a sample obtained by mixing the zeolite that is to be measured and α-alumina, which is a standard substance, in the same volume. The intensity A of the main peak of zeolite obtained by X-ray diffraction measurement and the diffraction intensity B of the (116) plane of α-alumina, which is a standard substance, are obtained, and A/B is calculated from the values of A and B. Intensities A and B are the heights of peaks obtained by X-ray diffraction measurement. If the zeolite is beta zeolite, the main peak is generally observed in the range of 2θ = 22.10 degrees to 23.58 degrees. On the other hand, if the zeolite is mordenite zeolite, the main peak is generally observed in the range of 2θ = 25.50 degrees to 26.00 degrees. The diffraction peak of the (116) plane of α-alumina, which is a standard substance, is generally observed in the range of 2θ = 57.40 degrees to 57.60 degrees. The reason why the diffraction peak of the (116) plane is adopted as the diffraction peak of the α-alumina is that the diffraction peak of zeolite is not observed in the vicinity of the diffraction peak of the (116) plane and the diffraction peak of the (116) plane has high intensity, and thus the accuracy of measurement can be improved.

X-ray diffraction is measured using, for example, RINT-TTR III manufactured by Rigaku Corporation and Cu Kα (0.15406 nm, 50 kV, 300 mA) as an X-ray source. The measurement range is 2θ = 5 to 80°, the scan speed is 20°/min, and the scan step width is 0.02°. The software "PDXL2" is used for the analysis of the diffraction intensity. After removing the background, the Kα1 position is set as the peak position and fitting is performed using a split-type pseudo Voigt function to obtain a value of diffraction intensity.

The Si/AI ratio of the zeolite produced using the method of the present invention is preferably from 4 to 40, and more preferably from 5 to 35. The Si/AI ratio can be determined by quantitative analysis of Si and Al using an ICP emission spectroscopic analysis method using an aqueous solution in which zeolite is dissolved as a sample.

The thus obtained zeolite of the present invention has high crystallinity in a range where the Si/AI ratio is relatively low, for example, in the range of 4 to 40. Taking advantage of this feature, the zeolite of the present invention is suitably used as an adsorbent for various compounds and a catalyst for various chemical reactions. There is no particular limitation on the form of the catalyst, and, for example, it may be a film-like or pellet-like form.

### Examples

Hereinafter, the present invention will be described in more detail by way of examples. However, the scope of the present invention is not limited to these examples.

### Example 1

### (1) Preparation of seed crystal

A beta zeolite with an Si/AI ratio of 9 was synthesized using tetraethylammonium hydroxide as an organic structure defining agent by stirring and heating at 165°C for 96 hours according to a conventionally known method using sodium aluminate as an alumina source, and fine powder silica (Mizukasil P707) as a silica source. The obtained material was calcined at 550°C for 10 hours in an air flow in an electric furnace to produce seed crystals containing no organic matter.

### (2) Preparation of OSDA-free beta zeolite

First, 0.235 g of sodium aluminate and 1.828 g of 36% sodium hydroxide were dissolved in 13.9 g of pure water. A mixture of 2.024 g of fine powder silica (Cab-O-sil, M-5) and 0.202 g of beta zeolite seed crystals was gradually added to the above-mentioned aqueous solution and mixed by stirring to obtain a reaction mixture with a composition of SiO₂/Al₂O₃ = 40, Na₂O/SiO₂ = 0.275, H₂O/SiO₂ = 25. This reaction mixture was placed in a 60-mL airtight container made of stainless steel and allowed to stand and heated at 140°C for 46 hours under autogenous pressure without aging and stirring. After cooling the airtight container, the product was filtered and washed with warm water to obtain a white powder. It was confirmed by X-ray diffraction measurement that the product was a sodium-type beta zeolite containing no impurities. As a result of ICP emission spectroscopic analysis, the Si/AI ratio was 5.

### (3) Preparation of ammonium-type OSDA-free beta zeolite

Then, 1 g of the sodium-type beta zeolite was dispersed in 30 mL of 2 mol/L aqueous ammonium nitrate solution. The dispersion was held at 80°C for 24 hours. The dispersion was then filtered, washed with a sufficient amount of distilled water, and dried at 100°C overnight. In this manner, an ammonium-type OSDA-free beta zeolite was obtained.

### (4) Dealumination of OSDA-free beta zeolite

Then, 1 g of ammonium-type OSDA-free beta zeolite was dispersed in 30 mL of pure water to obtain a dispersion. Ammonium fluorosilicate was used as a dealuminating agent. Then, 0.2675 g of ammonium fluorosilicate powder reagent was added to the OSDA-free beta zeolite dispersion (equivalent to 0.05 mol/L of aqueous ammonium fluorosilicate solution). The solution was heated at 60°C for 3 hours. Subsequently, filtration and washing with pure water were repeated. The obtained hydrous powder was dried at 100°C for 12 hours or more. In this way, an OSDA-free beta zeolite powder with an Si/AI ratio of 6 was obtained.

### Example 2

The concentration of the aqueous ammonium fluorosilicate solution used in the dealumination in Example 1 was set to 0.1 mol/L. The other aspects were the same as those in Example 1.

### Example 3

The concentration of the aqueous ammonium fluorosilicate solution used in the dealumination in Example 1 was set to 0.3 mol/L. The other aspects were the same as those in Example 1.

### Example 4

The concentration of the aqueous ammonium fluorosilicate solution used in the dealumination in Example 1 was set to 0.5 mol/L. The other aspects were the same as those in Example 1.

### Example 5

The concentration of the aqueous ammonium fluorosilicate solution used in the dealumination in Example 1 was set to 1 mol/L. The other aspects were the same as those in Example 1.

The concentration of the aqueous ammonium fluorosilicate solution used in the dealumination in Example 1 was set to 3 mol/L. The other aspects were the same as those in Example 1.

### Example 7

After the OSDA-free beta zeolite was dealuminated in Example 5, acid treatment using nitric acid was performed as aftertreatment. Nitric acid was dispersed in water to obtain a 1 mol/L aqueous solution. Then, 1 g of dealuminated OSDA-free beta zeolite powder was mixed with 30 mL of 1 mol/L aqueous nitric acid solution to perform acid treatment. The mixing temperature was set to 80°C, and the mixing time was set to 20 hours. The other aspects were the same as those in Example 5.

### Example 8

The amount of ammonium-type OSDA-free beta zeolite used in the dealumination in Example 1 was set to 10 g. Furthermore, the concentration of the aqueous ammonium fluorosilicate solution used in the dealumination was set to 0.1 mol/L, the temperature at which the aqueous ammonium fluorosilicate solution was heated was set to 80°C, and the heating time was set to 10 hours. The other aspects were the same as those in Example 1.

Subsequently, 1 g of dealuminated OSDA-free beta zeolite powder was mixed with 30 mL of 1 mol/L aqueous nitric acid solution to perform acid treatment. The mixing temperature was set to 80°C, and the mixing time was set to 20 hours.

### Example 9

The amount of ammonium-type OSDA-free beta zeolite used in the dealumination in Example 1 was set to 10 g. Furthermore, the concentration of the aqueous ammonium fluorosilicate solution used in the dealumination was set to 0.25 mol/L, the heating temperature using the aqueous ammonium fluorosilicate solution was set to 80°C, and the heating time was set to 10 hours. The other aspects were the same as those in Example 1.

Subsequently, 1 g of dealuminated OSDA-free beta zeolite powder was mixed with 30 mL of 1 mol/L aqueous nitric acid solution to perform acid treatment. The mixing temperature was set to 80°C, and the mixing time was set to 20 hours.

### Example 10

The amount of ammonium-type OSDA-free beta zeolite used in the dealumination in Example 1 was set to 10 g. Furthermore, the concentration of the aqueous ammonium fluorosilicate solution used in the dealumination was set to 1 mol/L. The other aspects were the same as those in Example 1.

Subsequently, 1 g of dealuminated OSDA-free beta zeolite powder was mixed with 30 mL of 1 mol/L aqueous nitric acid solution to perform acid treatment. The mixing temperature was set to 80°C, and the mixing time was set to 20 hours.

### Example 11

The following step was performed instead of the step (4) of dealuminating OSDA-free beta zeolite in Example 1.

After 1.695 ml of 40 mass% aqueous fluorosilicic acid (H₂SiF₆) solution was mixed with 8.25 ml of pure water, 1.263 ml of 25 mass% aqueous NH₃ solution was gradually added dropwise to neutralize the aqueous fluorosilicic acid solution, and thus ammonium fluorosilicate was produced in the solution. Then, 2.75 g of ammonium-type OSDA-free beta zeolite was dispersed in this neutralized solution to obtain a dispersion. The dispersion was heated at 60°C for 3 hours to perform dealumination. Subsequently, filtration and washing with pure water were repeated. The obtained hydrous powder was dried at 100°C for 12 hours or more. In this way, an OSDA-free beta zeolite powder with an Si/AI ratio of 8 was obtained. The other aspects were the same as those in Example 1.

### Example 12

After the OSDA-free beta zeolite was dealuminated in Example 11, acid treatment using nitric acid was performed. Specifically, 1 g of dealuminated OSDA-free beta zeolite powder was mixed with 30 mL of 1 mol/L aqueous nitric acid solution to perform acid treatment. The mixing temperature was set to 80°C, and the mixing time was set to 20 hours. The other aspects were the same as those in Example 11.

### Reference Example 1

An example in which dealumination was not performed in Example 1 was taken as Reference Example 1.

### Example 13

Before the OSDA-free beta zeolite was dealuminated in Example 5, pretreatment of exposing the zeolite to water vapor was performed. The zeolite was exposed to an air flow at 1.2 L/min with a water vapor partial pressure of about 7 kPa, at 500°C for 20 hours. The other aspects were the same as those in Example 5.

### Example 14

Before the OSDA-free beta zeolite was dealuminated in Example 5, pretreatment of exposing the zeolite to water vapor was performed. The zeolite was exposed to an air flow at 1.2 L/min with a water vapor partial pressure of about 7 kPa, at 700°C for 20 hours. The other aspects were the same as those in Example 5.

### Reference Example 2

An example in which dealumination was not performed in Example 13 was taken as Reference Example 2.

### Comparative Example 1

A dealuminated OSDA-free beta zeolite was prepared according to a conventional technique US 2017/368539A1 (Patent Literature 3 in "Background Art").

That is to say, nitric acid was dispersed in water to obtain a 0.4 mol/L aqueous solution. An OSDA-free beta zeolite was synthesized using seed crystals in a similar way to that of Example 1. The zeolite was exposed to water vapor under the same conditions as those in Example 13, and then 1 g of OSDA-free beta zeolite was dispersed in and mixed with 17.5 mL of 0.4 mol/L aqueous nitric acid solution to perform acid treatment. The mixing temperature was set to 60°C, and the mixing time was set to 1 hour.

### Example 15

### (1) Preparation of OSDA-free mordenite zeolite

A reaction mixture was placed in a 60-mL airtight container made of stainless steel, and a white powder was obtained according to the same procedure as that described in (1) and (2) of Example 1, except that the temperature was set to 150°C and the time was set to 100 hours when the mixture was allowed to stand and heated under autogenous pressure without aging and stirring. It was confirmed by X-ray diffraction measurement and ICP emission spectroscopic analysis that the product was a sodium-type mordenite zeolite. As a result of ICP emission spectroscopic analysis, the Si/AI ratio was 5.

### (2) Preparation of ammonium-type OSDA-free mordenite zeolite

Then, 1 g of the sodium-type mordenite zeolite was dispersed in 30 mL of 2 mol/L aqueous ammonium nitrate solution. The dispersion was held at 80°C for 24 hours. The dispersion was then filtered, washed with a sufficient amount of distilled water, and dried at 100°C overnight. In this way, an ammonium-type OSDA-free mordenite zeolite was obtained.

### (3) Dealumination of OSDA-free mordenite zeolite

Then, 1 g of ammonium-type OSDA-free mordenite zeolite was dispersed in 30 mL of pure water to obtain a dispersion. Ammonium fluorosilicate was used as a dealuminating agent. Then, 5.35 g of ammonium fluorosilicate powder reagent was added to the OSDA-free mordenite zeolite dispersion (equivalent to 1 mol/L of aqueous ammonium fluorosilicate solution). The solution was heated at 60°C for 3 hours. Subsequently, filtration and washing with pure water were repeated. The obtained hydrous powder was dried at 100°C for 12 hours or more.

### (4) Acid treatment

Next, acid treatment using nitric acid was performed as aftertreatment. Nitric acid was dispersed in water to obtain a 0.1 mol/L aqueous solution. Then, 1 g of OSDA-free mordenite zeolite powder treated with the aqueous ammonium fluorosilicate solution was dispersed in and mixed with 30 mL of 0.1 mol/L aqueous nitric acid solution to perform acid treatment. The mixing temperature was set to 80°C, and the mixing time was set to 20 hours. In this way, an OSDA-free mordenite zeolite powder with an Si/AI ratio of 7 was obtained.

### Example 16

The concentration of the aqueous nitric acid solution used in the acid treatment in Example 15 was set to 3 mol/L. The other aspects were the same as those in Example 15.

### Reference Example 3

The dealumination in Example 15 was not performed. The other aspects were the same as those in Example 15.

### Comparative Example 2

An OSDA-free mordenite zeolite was synthesized using seed crystals in a similar way to that of Example 15. The zeolite was exposed to water vapor under the same conditions as those in Example 13, and then 1 g of OSDA-free mordenite zeolite was dispersed in and mixed with 17.5 mL of 3 mol/L aqueous nitric acid solution to perform acid treatment. The mixing temperature was set to 60°C, and the mixing time was set to 1 hour.

### Evaluation

The zeolites obtained in the examples, the comparative examples, and the reference examples were subjected to X-ray diffraction measurement according to the above-mentioned method, and the values of A and B and the intensity ratio A/B described above were determined. Furthermore, elemental analysis was performed to determine the Si/AI ratio. Table 1 below shows the results of Examples 1 to 12 and Reference Example 1. Table 2 shows the results of Examples 13 and 14 and Reference Example 2. Table 3 shows the results of Comparative Example 1. Furthermore, Table 4 shows the results of Examples 15 and 16, Reference Example 3, and Comparative Example 2.

**Table 1**

| | Si/AI ratio | Diffraction intensity A (cps) of zeolite | Diffraction intensity B (cps) of standard sample | Intensity ratio A/B |
|---|---|---|---|---|
| Ref. Ex. 1 | 5 | 81885 | 63755 | 1.28 |
| Ex. 1 | 6 | 81209 | 63780 | 1.27 |
| Ex. 2 | 7 | 85031 | 63790 | 1.33 |
| Ex. 3 | 8 | 91475 | 63750 | 1.43 |
| Ex. 4 | 8 | 91347 | 63740 | 1.43 |
| Ex. 5 | 10 | 92892 | 63757 | 1.46 |
| Ex. 6 | 13 | 98512 | 63752 | 1.55 |
| Ex. 7 | 26 | 97019 | 63780 | 1.52 |
| Ex. 8 | 11 | 75034 | 63753 | 1.18 |
| Ex. 9 | 16 | 96768 | 63785 | 1.52 |
| Ex. 10 | 23 | 95975 | 63755 | 1.51 |
| Ex. 11 | 8 | 107183 | 63732 | 1.68 |
| Ex. 12 | 26 | 88709 | 63733 | 1.39 |

**Table 2**

| | Si/AI ratio | Diffraction intensity A (cps) of zeolite | Diffraction intensity B (cps) of standard sample | Intensity ratio A/B |
|---|---|---|---|---|
| Ref. Ex. 2 | 5 | 50022 | 63761 | 0.78 |
| Ex. 13 | 24 | 76255 | 63730 | 1.20 |
| Ex. 14 | 33 | 53509 | 63728 | 0.84 |

**Table 3**

| | Si/AI ratio | Diffraction intensity A (cps) of zeolite | Diffraction intensity B (cps) of standard sample | Intensity ratio A/B |
|---|---|---|---|---|
| Com. Ex. 1 | 13 | 32321 | 63753 | 0.51 |

**Table 4**

| | Si/AI ratio | Diffraction intensity A (cps) of zeolite | Diffraction intensity B (cps) of standard sample | Intensity ratio A/B |
|---|---|---|---|---|
| Ref. Ex. 3 | 5 | 62211 | 63757 | 0.98 |
| Com. Ex. 2 | 29 | 27646 | 63770 | 0.43 |
| Ex. 15 | 7 | 69798 | 63757 | 1.09 |
| Ex. 16 | 31 | 35575 | 63755 | 0.56 |

As shown in Table 1, the beta zeolite obtained in Example 1 had an intensity ratio A/B similar to that of Reference Example 1 even though it was produced by dealuminating the beta zeolite obtained in the reference example, and thus it can be seen that the example realizes a beta zeolite with high crystallinity. In a similar manner, it can be seen that Examples 2 to 12 also realize beta zeolites with high crystallinity.

As shown in Table 2, the beta zeolites of Examples 13 and 14 in which pretreatment of exposing beta zeolites to water vapor was performed also had high intensity ratios A/B, and thus it can be seen that the examples realize beta zeolites with high crystallinity.

As shown in Table 3, the beta zeolite of Comparative Example 1 dealuminated by acid treatment according to a conventional technique had a lower intensity ratio A/B than those of the beta zeolites obtained in Examples 1 to 14, and thus it can be seen that the crystallinity thereof is low.

As shown in Table 4, the mordenite zeolites obtained in Examples 15 and 16 also had intensity ratios A/B higher than that of the mordenite zeolite of Comparative Example 2 dealuminated by acid treatment according to a conventional technique, and thus it can be seen that the examples realize mordenite zeolites with high crystallinity.

### Industrial Applicability

As described above in detail, the present invention provides a method for producing a zeolite having high crystallinity in the range of a relatively low Si/AI ratio.

## Claims

1. A method for producing a zeolite, comprising the steps of:
subjecting a zeolite synthesized without using an organic structure directing agent to ion exchange, thereby obtaining a sodium-type, a proton-type, or an ammonium-type zeolite; and
bringing the zeolite subjected to ion exchange into contact with an ammonium salt solution, thereby dealuminating the zeolite.

2. The method according to claim 1, wherein the ammonium salt comprises ammonium oxalate, ammonium fluoride, ammonium fluorosilicate, ammonium fluoroborate, ammonium fluorophosphate, ammonium fluorotitanate, or ammonium florozirconate.

3. The method according to claim 1 or 2, wherein the zeolite subjected to ion exchange is exposed to water vapor, and is then brought into contact with the ammonium salt solution.

4. The method according to any one of claims 1 to 3, further comprising subjecting the zeolite after contact with the ammonium salt solution to acid treatment.

5. The method according to any one of claims 1 to 4, wherein the zeolite is a beta zeolite or a mordenite zeolite.
